# EUROPEAN PATENT SPECIFICATION

(11) **EP 1 449 028 B1**
(45) Date of publication and mention of the grant of the patent: **22.11.2006**
(21) Application number: 02779106.0
(22) Date of filing: 10.10.2002
(51) Int. Cl.: G03B 15/10, D04H 13/00, B32B 5/24

(54) **BACKGROUND SCREEN FOR SPECIAL EFFECT SHOTS**
HINTERGRUNDSSCHIRM FÜR SPEZIALEFFEKTFOTOGRAFIE
ÉCRAN DE FOND POUR PRISES DE VUES AVEC EFFETS SPECIAUX

(30) Priority: 11.10.2001 CZ 200112436 U
(43) Date of publication of application: 25.08.2004
(73) Proprietor: Svoboda, Martin, 180 00 Praha 8 (CZ); Borovicka, Jirí, 130 00 Praha 3 (CZ); Weiser, Antonin, 104 00 Praha 10 (CZ)
(72) Inventor: Svoboda, Martin, 180 00 Praha 8 (CZ); Borovicka, Jirí, 130 00 Praha 3 (CZ); Weiser, Antonin, 104 00 Praha 10 (CZ)
(74) Representative: Zak, Vitezslav
(86) International application number: PCT/CZ2002/000054
(87) International publication number: WO 2003/032076

(56) References cited:
- US-A- 5 897 413
- DATABASE WPI Section PQ, Week 200014 Derwent Publications Ltd., London, GB; Class P82, AN 2000-150914 XP002231974 & JP 2000 010193 A (EASTERN KK), 14 January 2000 (2000-01-14) & JP 2000 010193 A (EASTERN KK) 14 January 2000 (2000-01-14)
- ROB HUMMEL: "American cinematographer manual" 2001 , AMERICAN SOCIETY OF CINEMATOGRAPHERS , HOLLYWOOD, CALIFORNIA USA XP002231973 page 320-321

## Description

### Technical Field

The invention relates to a background screen for covering a background during special effect shots, in particular for works in film and TV studios.

### Background of the Invention

There are known textiles used in film and TV productions to build a background for special effect shots. It is used as one of possible means for masking techniques described as "blue box" procedure, by which such textiles, being hanged, laid down or anyhow arranged, provides for a background behind a taken scene.

The said textiles serve as a colour homogenous background behind taken objects, the background featuring a colour shade which is not present within the objects. Simultaneously it is required to have a minimum light reflectance in the rest of colour spectrum and suppression of undesired parasitic reflexes. The above requirements being accomplished, during processing respective shots by electronic and/or optical means, it is possible to remove the taken single-coloured background from the shots and subsequently combine the shots with other ones, taken e.g. in an exterior or a dangerous locality, etc. Last but not least it is required that such a textile allows for an easy installation, resistance to a mechanical wear, undemanding maintenance and a long operational life-time

The known screen textiles are thin, their thickness not exceeding 2 mm. A current woven coloured textiles, e. g. linen, manifest very unstable optical properties, depending upon wear, dirtiness, undulation, way of illumination and further factors. Among very important undesired features there should be mentioned a non-reversible and irregular change of a colour shade and the colour richness. The application is therefore limited to cases when their easy technical and economic accessibility have priority for the decision.

Better results are achieved with screen textile screens having a surface covered by a colour layer, usually with a higher content of non-transparent filler. Application of such camouflage textiles at present enables processing of special effect shots at the best currently available quality. By this solution the textile function is reduced to a carrier, as only its mechanical properties are utilised. Optical properties are provided for by applied colour and its shade. Such known solution is described e.g. in papers published by the company Rosco Laboratories, Inc., USA. The solution applies a linen being single sided covered by a layer of a blue colour, the layer when disposed to a light having a temperature of 6000 °K featuring maximum reflectance for light of wave length in an interval from 450 to 480 nm, the interval covering approx. 40 % of the amount of the reflected light. There is also known an application of a textile having green colour, characterised by maximum reflectance for light of wave length in an interval 510 - 560 nm, the interval covering approx. 40 % of the amount of the reflected light. This solution in practise comprise also application of a colour paint on a textile of the same colour. The said colour distribution allows on the one hand for small local corrections of the unified shade when necessary due to wear and/or dirtiness of the textile, on the other hand for covering joints. Repairs of larger areas are usually unsuccessful. Identical colour is also used for covering background surfaces, which cannot be covered by the camouflage textile because of insufficient endurance of the textile or its coloured surface, especially as far as floors are concerned. The above mentioned two colours of screen textiles, the blue and green ones, have been accepted for special effect shots with live actors as "de facto" standards. For special effect shots with other objects there are used, though not so frequently, also other colours than the preferred ones.

The above discussed screen textiles wear away rather fast, even during ordinary works in a studio, mainly due to dust or routine maintenance. The wear is accompanied by uneven changes of optical properties, especially as regards a colour shade and a reflectance. By known coloured textiles, particularly cloths, such changes are non-removable. The textiles covered by colour surface layer feature relatively large, flat and smooth areas showing rather high gloss, which cause parasite reflections of large amount of light, comprising even the very part of light spectrum which should be completely absorbed. Such a fact, especially when a moving camera is in action, results in high demands not only upon cameramen and lighting engineers but also upon further processing, as a light reflex from a larger flat, optically unbroken surface, aiming in a single direction may completely damage taken shots. Another disadvantage may occur even by a perfect condition of a camouflage textile, when a range of reflected part of a colour spectrum to be consequently removed is wide. Such a fact has a negative influence upon efforts on further processing of the shots and especially upon authenticity of colours. The total extent of reflected light amounts to high values both in desired and undesired parts of the colour spectrum. It has to be also noted that known textiles, because of their mechanical properties, are not suitable for covering floors and for creation of non-disturbing links to another surfaces, because they buckle even by normal walk and degrade very fast.

An example of a conventional background screen is disclosed in US-A-5 897 413.

It is an object of the invention to remove the above presented drawbacks of known background screens.

### Disclosure of the Invention

The foregoing problems are in a large extent solved and the object achieved by a background screen in accordance with claim 1.

Further in accordance with the present invention the optically effective textile layer is at one surface furnished either with a reinforcing cloth having gaps the size of which is within the range of 0,5 up to 5 mm, or with a reinforcing knitting, showing gaps the size of which is within a range of 0,5 up to 15 mm.

Still further in accordance with the invention the optically effective textile layer is at one surface provided with a reinforcing paint.

In a preferred embodiment the optically effective textile layer is at one surface provided with an optically effective facial layer, the fibres of which occupy from 1,5 to 5 % of the layer and the facial layer thickness covering from 10 % up to 100 % of the textile thickness.

In another preferred embodiment the background screen is of a uniform colour shade, preferably either the blue one, featuring a reflected light wave length of 450 nm up to 480 nm, or the green shade, featuring a reflected light wave length of 510 up to 560 nm.

Low volume density of the screen and its in any plane linearly unaligned fibre structure significantly influence optical properties. Light rays penetrate deep into the textile layer, where they are mainly absorbed, the rest being repeatedly, reflected into multiple directions, quite on the contrary to known camouflage textiles. The effect is due to the internal structure of the textile consisting of a large number of small curved and poly-directionally oriented surfaces of individual fibres. The reflected light when impacting upon further fibres is again absorbed and/or reflected, similarly as it is by multiple reflections in a labyrinth. Because of the said effects the background screen according to the invention shows no continuous, large, in space identically oriented shiny areas, producing parasitic reflexes. Similar to known solutions the applied colour shade then determines in which part of a colour spectrum is the textile reflectance the highest one.

The background screen according to the invention is resistant against wear, namely against dirt, including dirt tracked up by walking and standard dustiness, as dirt and first of all dust penetrate down to varies depths of the textile layer a do not form areas influencing optical properties. In a case of long-time operation, dustiness or dirtiness of the textile can be without any problems removed by standard vacuum cleaner or by homogenisation of the textile surface by a mere quick brushing.

Brushing may be applied also for homogenisation of joints of individual parts, which need not to be mutually bonded, but may be connected together by a velcro allowing for easy and fast assembly and disassembly. Such properties facilitates works with the textile to a very high extent.

In a preferred embodiment the background screen comprises up to three layers, namely additional optically active, sparse facial layer, the fibres of which occupy 1,5 % up to 5 % of the layer volume while the rest 95 % up to 98,5 % of the volume is a free space, above described optically active basic layer and an underside, reinforcing layer. The reinforcing layer may be formed by a knitting, grid, netting, sparse cloth, felt, reinforcing paint-over, even by a foam layer. Thickness of the facial layer includes from 10 % up to 100 % of the basic layer, the reinforcing layer is thinner than 2 mm. The optically active layer is preferably made of polyester, especially from matt, cut fibres of a recycled material. The reinforcing knitting or sparse cloth is preferably made of cotton. Reinforcing paint-over or foam layer is preferably made of permanently resilient material, based e.g. on caoutchouc. Individual layers, especially the facial and the basic ones may merge one into the other with a boundary between them being invisible.

### Description of Examples of Preferred Embodiments

The invention is further illustrated by way of following examples.

### Example 1

There was prepared a background screen comprised one non-woven layer having a thickness of 7,5 up to 8,0 mm and consisting of poly-directionally oriented, multi-curved, i.e. in any plane lineary unaligned fibres. The fibres were cut ones from a recycled material, the fibres having a thickness within the range of 90 µm up to 200 µm and being in a matt modification.

The fibres occupied from 5 % up to 10 % of the textile layer volume while a space between the fibres occupied from 90 % up to 95 % of the said volume. The said fibres were coloured with a blue dye having maximum reflectance of the light of 465 nm wave length. This embodiment of the textile has shown excellent results when used as a cover of vertical surfaces, being partially extended upon floor not used for any activities.

### Example 2

There has been prepared a reinforced camouflage textile comprising two layers. The first one, an 8 mm thick, non-woven layer of poly-directionally oriented, multi-curved, polyamide fibres had a thickness within the range of 180 µm up to 200 µm and was in a matt modification The fibres occupied from 5 % up to 15 % of the layer volume, the space between the fibres occupying from 85 % up to 95 % of the said volume. The said fibres were coloured with a blue dye with maximum reflectance for the light of 465 nm wave length. The second, underside layer was prepared as a foam layer of a thickness in the range from 0,5 up to 1 mm. This embodiment of the textile has shown good results when used as a cover of large vertical surfaces, being partially extended upon floor under a low load.

### Example 3

There has been prepared a reinforced background screen consisting of three layers. The first, facial, 2 mm thick, non-woven layer of poly-directionally oriented, multi-curved, polyamide fibres had a thickness within the range of 50 µm up to 100 µm and was in a matt modification The fibres occupied 2 % of the layer volume with a space between the fibres occupying 95 % of the said volume. The said fibres were coloured with a blue dye having maximum reflectance for the light of 465 nm wave length. The facial layer merged into a 5 mm thick basic layer, consisting of poly-directionally oriented, multi-curved, polyester cut fibres from a recycled material, having a thickness within the range of 50 µm up to 100 µm and being in a matt modification The fibres occupied from 3 % up to 8 % of the layer volume, the space between the fibres occupying from 92 % up to 97 % of the said volume. The said fibres were coloured with a green dye having maximum reflectance for the light of 535 nm wave length. The third, underside layer was composed of reinforcing knitting in a form of a net having a mesh size 5 x 5 mm and the same colour shade as the other two layers. The third layer had been fused with the basic layer. This textile has shown very good utility properties being applied as a cover of large vertical surfaces and partially extended upon floor under low load.

### Example 4

There has been prepared a reinforced background screen consisting of three layers. The first one, 4 up to 6 mm thick, combed layer of poly-directionally oriented, multi-curved, wool fibres had a thickness within the range of 50 µm the fibres occupying 3 - 5 % of the layer volume with a space between the fibres occupying 95 - 97 % of the said volume. The first layer merged into a second one, 1-2 mm thick woven layer, consisting of poly-directionally oriented, multi-curved, wool fibres. The second layer merged into the third layer being similar to the first layer. The textile was coloured with a green dye having maximum reflectance for the light of 535 nm wave length. This textile has shown very good utility properties being utilised as a wall cover and other applications like that but is suitable also for clothing purposes. This textile may be used double-sided.

### Industrial applications

The background screen according to the present invention is designed for film or TV industry, for covering of a background by special effect shots taken either in an interior or in an exterior, or for production of audiovisual or photographic works

## Claims

1. Background screen for special effect shots comprising at least one optically effective textile layer **characterised in, that** the layer has a thickness of 1,5 - 12 mm, the layer consisting of a plurality of curved, poly-directionally oriented, in any plane linearly unaligned fibres having a thickness from 50 µm to 200 µm, provided the fibres occupy from 1,5 % up to 20 % of the textile layer volume while a space between the fibres occupies from 80 % up to 98,5 % of the said volume.

2. Background screen according to claim 1, **characterised in, that** the optically effective textile layer is at one surface provided with a reinforcing cloth having gaps the size of which is within the range of 0,5 up to 5 mm.

3. Background screen according to claim 1, **characterised in, that** the optically effective textile layer is at one surface provided with a reinforcing knitting having gaps the size of which is within the range of 0,5 up to 15 mm.

4. Background screen according to claim 1, **characterised in, that** the optically effective textile layer is at one surface provided with a reinforcing paint.

5. Background screen according to any of preceding claims, **characterised in, that** the optically effective textile layer is at one surface provided with an optically effective facial layer, the fibres of which occupy 1,5 - 5 % of the layer and the facial layer thickness covering from 10 up to 100 % of the textile thickness.

6. Background screen according to any of preceding claims, **characterised in, that** it is of a uniform shade, preferably the blue one, featuring a reflected light wave length of 450 nm up to 480 nm, or the green shade, featuring a reflected light wave length of 510 up to 560 nm,

## Patentansprüche

1. Hintergrundschirm für Spezialeffektfotografie, bestehend aus mindestens einer optisch wirksamen Textilschicht mit einer Dicke von 1,5 - 12 mm, die sich aus mehrfach gekrümmten, polydirektional ausgerichteten und in jeder beliebigen Ebene nicht linear angeordneten Fasern mit einer Dicke von 50 - 200 µm zusammensetzt, wobei diese Fasern 1,5 - 20 % des Volumens der Schicht und die Lücken zwischen ihnen 80 - 98,5 % des Volumens der optisch wirksamen Textilschicht einnehmen.

2. Hintergrundschirm nach Anspruch 1, **dadurch gekennzeichnet, dass** die optisch wirksame Textilschicht auf einer Seite fest mit einem Versteifungsgewebe verbunden ist, dessen Öffnungen eine Größe von 0,5 - 5 mm haben.

3. Hintergrundschirm nach Anspruch 1, **dadurch gekennzeichnet, dass** die optisch wirksame Textilschicht auf einer Seite fest mit einem Versteifungsgewirke verbunden ist, dessen Maschen eine Größe von 0,5 - 15 mm haben.

4. Hintergrundschirm nach Anspruch 1, **dadurch gekennzeichnet, dass** die optisch wirksame Textilschicht auf einer Seite mit einer verstärkenden Beschichtung versehen ist.

5. Hintergrundschirm nach einem der vorstehenden Ansprüche, **dadurch gekennzeichnet, dass** die optisch wirksame Textilschicht auf einer Seite mit einer optisch wirksamen lockeren Deckschicht versehen ist, in der die Fasern 1,5 - 5 % und der Freiraum zwischen ihnen 95 - 98,5 % des Volumens einnehmen, wobei die Dicke der Deckschicht 10 - 100 % der Textilschicht beträgt.

6. Hintergrundschirm nach einem der vorstehenden Ansprüche, **dadurch gekennzeichnet, dass** er in einem einheitlichen Farbton gefärbt ist, vorzugsweise in einem Blauton mit einer Wellenlänge des reflektierten Lichts von 450 - 480 nm oder einem Grünton mit einer Wellenlänge des reflektierten Lichts von 510 - 560 nm.

## Revendications

1. Écran de fond pour prises de vues avec effets spéciaux constitué d'au moins une couche textile avec effet optique d'une épaisseur entre 1,5 et 12 mm, elle-même constituée de fibres courbées multiple fois, orientées en plusieurs sens et dans le plan au choix, structurées de manière non linéaire, d'une épaisseur entre 50 et 200 µm ces fibres représentant 1,5 -20% du volume de la couche, et les espaces entre elles représentant 80 - 98,5% du volume de la couche textile avec effet optique

2. Écran de fond pour prises de vues selon la revendication 1, **caractérisé en ce que** la couche textile avec effet optique communique d'un côté avec le tissu de renfort dont la taille de *mailles* se situe entre 0,5 et 5 mm

3. Écran de fond selon la revendication 1, **caractérisé en ce que** la couche textile avec effet optique communique d'un côté avec le tricot de renfort dont la taille de mailles se situe entre 0,5 et 15 mm

4. Écran de fond selon la revendication 1, **caractérisé en ce que** la couche textile avec effet optique est munie d'un côté de la peinture pour renforcer sa résistance

5. Écran de fond selon l'une des revendications précédentes **caractérisé en ce que** la couche textile avec effet optique est munie d'un côté de la couche à l'endroit lâche avec effet optique dans laquelle les fibres représentent 1,5 - 5 % et le libre espace entre 95 et 98,5% du volume, l'épaisseur de la couche à l'endroit se situant entre 10 et 100% de la couche textile

6. Écran de fond selon l'une des revendications précédentes, **caractérisé en ce que** il a une teinte uniforme, avec avantage bleue, **caractérisée par** la longueur d'ondes de la lumière réfléchie entre 450 et 480 nm, ou verte, **caractérisée par** la longueur d'ondes de la lumière réfléchie entre 510 et 560 nm.
